# EUROPEAN PATENT SPECIFICATION

(11) **EP 4 089 635 B1**
(45) Date of publication and mention of the grant of the patent: **05.03.2025**
(21) Application number: 21203697.4
(22) Date of filing: 20.10.2021
(51) Int. Cl.: G06T 7/12, G06T 7/62

(54) **IMAGE ANALYZATION METHOD AND IMAGE ANALYZATION DEVICE**
VERFAHREN UND VORRICHTUNG ZUR BILDANALYSE
PROCÉDÉ ET DISPOSITIF D'ANALYSE D'IMAGE

(30) Priority: 11.05.2021 TW 110116847
(43) Date of publication of application: 16.11.2022
(73) Proprietor: Acer Medical Inc., 22181 New Taipei City (TW)
(72) Inventor: Ke, Liang-Yu, 22181 NEW TAIPEI CITY (TW)
(74) Representative: 2K Patentanwälte Blasberg Kewitz & Reichel

(56) References cited:
- WO-A2-01/55965
- NGUYEN THONG PHI ET AL: "Deep learning system for Meyerding classification and segmental motion measurement in diagnosis of lumbar spondylolisthesis", BIOMEDICAL SIGNAL PROCESSING AND CONTROL, ELSEVIER, AMSTERDAM, NL, vol. 65, 28 November 2020 (2020-11-28), XP086474473, ISSN: 1746-8094, [retrieved on 20201128], DOI: 10.1016/J.BSPC.2020.102371

## Description

### BACKGROUND

### Technical Field

The disclosure relates to an image analyzation technology, and more particularly, to an image analyzation method and an image analyzation device.

### Description of Related Art

With the advancement of technology, it is becoming more and more common to use automated image analyzation technology to assist professionals such as doctors or laboratory scientists in analyzing medical images.

NGUYEN THONG PHI ET AL: "Deep learning system for Meyerding classification and segmental motion measurement in diagnosis of lumbar spondylolisthesis", BIOMEDICAL SIGNAL PROCESSING AND CONTROL, ELSEVIER, AMSTERDAM, NL, vol. 65, 28 November 2020 mainly concerns the development of a deep learning system with supported by the convolutional neural network (CNN), in which the supplementary CNN model is trained to re-correct the keypoints located on corners of vertebra based on the first CNN regression model, to precisely measure required characteristics. In order to determine the instability of the lumbar spondylolisthesis, the measurement ability of the proposed method is also required to adapt to multiple lateral bending views including flexion and extension postures.

WO 01/55965 A2 discloses a method for extracting geometrical data from a 2-D digital image of the spine, comprising steps for determining spine outlines, endplates and corners wherein: digitizing the spine center line and end points; constructing a 2-D image band, referred to as Rubber-Band, whose center line is a spline representing the spine center line, and unfolding said Rubber-Band for constructing a 2-D Rectangular-Band; processing the 2-D Rectangular-Band image data in order to estimate best paths going through selected points for determining the spine outlines, then the endplates based on the found outline data and the corners at the intersection of the outlines and endplates.

However, the current automated image analyzation technology is not more accurate for the analysis of the X-ray image of human spine. The possible reason is that a general spine X-ray image will present multiple adjacent vertebrae (also referred to as osteomeres). When interpreting the spine X-ray image, it is possible that, in the automated image analyzation technology, too many osteomeres exist in the same spine X-ray image at the same time, so that the system cannot locate the correct osteomere for analysis.

### SUMMARY

In order to solve the above problem, the invention provides an image analyzation method according to claim 1 and an image analyzation device according to claim 6, which may improve an accuracy of automated image analyzation. Advantageous embodiments are the subject of the dependent claims.

An embodiment of the disclosure provides an image analyzation method carried out by an image analyzation device, which includes the following steps. A first image which is an X-ray image is obtained, and at least a first object and a second object are presented in the first image. The first image is analyzed to detect a first central point between a first endpoint of the first object and a second endpoint of the second object. A target region is determined in the first image based on the first central point as a center of the target region. A second image located in the target region is captured from the first image. The second image is analyzed to generate status information, and the status information reflects a gap status between the first object and the second object.

An embodiment of the disclosure further provides an image analyzation device, which includes a processor and a storage circuit. The processor is coupled to the storage circuit. The processor is coupled to the storage circuit. The processor is configured to: obtain a first image which is an X-ray image, and at least a first object and a second object are presented in the first image; analyze the first image to detect a first central point between a first endpoint of the first object and a second endpoint of the second object; determine a target region in the first image based the first central point as a center of the target region; capture a second image located in the target region from the first image; and analyze the second image to generate status information, and the status information reflects a gap status between the first object and the second object.

Based on the above, after obtaining the first image, the first central point between the first endpoint of the first object in the first image and the second endpoint of the second object in the first image may be detected, and the target region may be automatically determined in the first image based on the first central point as the center of the target region. Next, the second image located in the target region may be captured from the first image and analyzed to generate the status information. In particular, the status information reflects the gap status between the first object and the second object. In this way, the accuracy of the automated image analyzation may be effectively improved.

### BRIEF DESCRIPTION OF THE DRAWINGS

FIG. 1 is a schematic view of an image analyzation device according to an embodiment of the disclosure.
FIG. 2 is a schematic view of a first image according to an embodiment of the disclosure.
FIG. 3 is a schematic view of detecting distances between multiple adjacent central points according to an embodiment of the disclosure.
FIG. 4 is a schematic view of determining a target region in a first image according to an embodiment of the disclosure.
FIG. 5 is a schematic view of a second image according to an embodiment of the disclosure.
FIG. 6 is a flowchart of an image analyzation method according to an embodiment of the disclosure.

### DETAILED DESCRIPTION OF DISCLOSED EMBODIMENTS

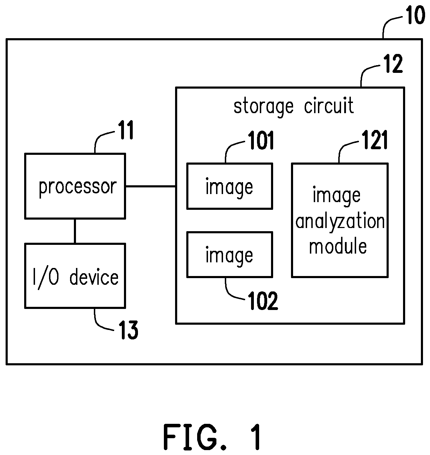

FIG. 1 is a schematic view of an image analyzation device according to an embodiment of the disclosure. Referring to FIG. 1, a device (also referred to as an image analyzation device) 10 may be any electronic device or computer device with image analyzation and calculation functions. In an embodiment, the device 10 may also be an X-ray inspection device or an X-ray scanner (referred to as an X-ray machine).

The device 10 includes a processor 11, a storage circuit 12, and an input/output (I/O) device 13. The processor 11 is coupled to the storage circuit 12 and the I/O device 13. The processor 11 is configured to be responsible for the overall or partial operation of the device 10. For example, the processor 11 may include a central processing unit (CPU), a graphics processing unit (GPU), other programmable general-purpose or special-purpose microprocessors, a digital signal processor (DSP), a programmable controller, an application specific integrated circuit (ASIC), a programmable logic device PLD), other similar devices, or a combination of the devices.

The storage circuit 12 is configured to store data. For example, the storage circuit 12 may include a volatile storage circuit and a non-volatile storage circuit. The volatile storage circuit is configured to store the data volatilely. For example, the volatile storage circuit may include a random access memory (RAM) or similar volatile storage media. The non-volatile storage circuit is configured to store the data non-volatilely. For example, the non-volatile storage circuit may include a read only memory (ROM), a solid state disk (SSD), a traditional hard disk drive (HDD), or similar non-volatile storage media.

In an embodiment, the storage circuit 12 stores an image analyzation module 121 (also referred to as an image recognition module). The image analyzation module 121 may perform an image recognition operation such as machine vision. For example, the processor 11 may run the image analyzation module 121 to automatically recognize a specific object presented in a specific image file. In addition, the image analyzation module 121 may also be trained to improve a recognition accuracy. In an embodiment, the image analyzation module 121 may also be implemented as a hardware circuit. For example, the image analyzation module 121 may be implemented as an independent image processing chip (such as the GPU). In addition, the image analyzation module 121 may also be disposed inside the processor 11.

The I/O device 13 may include an input/output device of various signals such as a communication interface, a mouse, a keyboard, a screen, a touch screen, a speaker, and/or a microphone. The disclosure does not limit the type of the I/O device 13.

In an embodiment, the processor 11 may obtain an image (also referred to as a first image) 101. For example, the image 101 may be stored in the storage circuit 12. The image 101 may be an X-ray image. For example, the image 101 may be the X-ray image obtained by using the X-ray machine to perform X-ray irradiation or scanning on a specific part of a human body. Multiple objects may be presented in the image 101. For example, the objects include at least a first object and a second object.

In an embodiment, both the first object and the second object are skeletons of the human body. For example, the first object and the second object may include a vertebra (also referred to as an osteomere) of a neck or a back of the human body. For example, in an embodiment, the image 101 may be the X-ray image which may present a shape and an arrangement of the osteomeres of the neck or the back of the human body obtained by using the X-ray machine to perform the X-ray irradiation or scanning on the neck or the back of the human body.

In an embodiment, the processor 11 may analyze the image 101 through the image analyzation module 121, so as to detect an endpoint (also referred to as a first endpoint) of the first object and an endpoint (also referred to as a second endpoint) of the second object in the image 101. Next, the processor 11 may detect a central point (also referred to as a first central point) between the first endpoint and the second endpoint. The first central point may be located at a central position between the first endpoint and the second endpoint.

In an embodiment, the processor 11 may determine a region (also referred to as a target region) in the first image based on the first central point as a center of the target region, and capture an image (also referred to as a second image) 102 located in the target region from the first image. For example, a central position of the target region may be located at a position where the first central point is located and/or overlap with the first central point. For example, a shape of the target region may be a rectangle, a circle, or other shapes. In addition, the captured image 102 may also be stored in the storage circuit 12.

In an embodiment, the processor 11 may analyze the image 102 through the image analyzation module 121 to generate status information. In particular, the status information may reflect a status of a gap (also referred to as a gap status) between the first object and the second object. For example, if the first object and the second object are the two adjacently arranged osteomeres of the neck or the back of the human body, the status information may reflect the status of the gap between the two osteomeres (for example, a width of the gap between the two osteomeres or the closeness of the two osteomeres), a health status of the two osteomeres, whether the arrangement of the two osteomeres conforms to characteristics of a specific disease, and/or whether the gap between the two osteomeres conforms to the characteristics of the specific disease. For example, the specific disease may include ankylosing spondylitis or other diseases.

In an embodiment, the status information may include scoring information. The scoring information may reflect a health status of the human body or a risk of suffering from the specific disease. For example, in an embodiment, the scoring information may include mSASSS. The mSASSS may reflect a risk level of ankylosing spondylitis in the human body corresponding to the image 102 (or 101). In an embodiment, the scoring information may also reflect a risk level of other types of diseases in the human body. The disclosure is not limited thereto.

In an embodiment, the status information may be presented in a form of a report. For example, the status information may be presented on a display of the device 10. In an embodiment, the status information may be sent to other devices, such as a smart phone, a tablet computer, a notebook computer, or a desktop computer, so as to be viewed by a user of other devices.

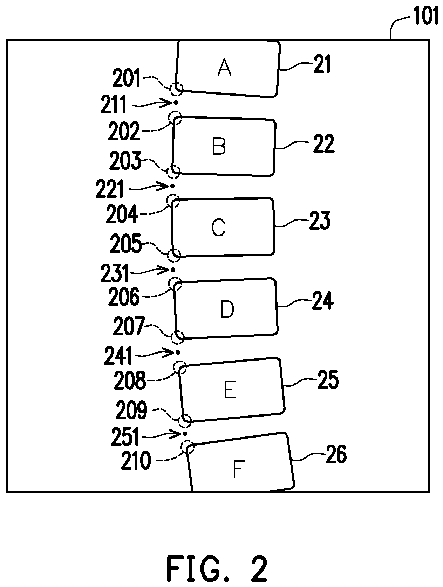

FIG. 2 is a schematic view of a first image according to an embodiment of the disclosure. Referring to FIG. 2, in an embodiment, objects 21 to 26 arranged adjacently to one another may be present in the image 101. For example, the objects 21 to 26 may actually be the osteomeres (marked as A to F) of the specific part (such as the neck or back) of the human body. In addition, in the presented objects 21 to 26, there is a gap (also referred to as a physical gap) between every two of the adjacently arranged objects. It should be noted that the disclosure does not limit the total number and arrangement status of the objects 21 to 26 presented in the image 101.

In an embodiment, the processor 11 may analyze the image 101 to detect endpoints 201 to 210 on the objects 21 to 26. For example, the endpoint 201 is the endpoint at a lower left corner of the object 21. The endpoint 202 is the endpoint at an upper left corner of the object 22, and the endpoint 203 is the endpoint at a lower left corner of the object 22. The endpoint 204 is the endpoint at an upper left corner of the object 23, and the endpoint 205 is the endpoint at a lower left corner of the object 23. The endpoint 206 is the endpoint at an upper left corner of the object 24, and the endpoint 207 is the endpoint at a lower left corner of the object 24. The endpoint 208 is the endpoint at an upper left corner of the object 25, and the endpoint 209 is the endpoint at a lower left corner of the object 25. The endpoint 210 is the endpoint at an upper left corner of the object 26. It should be noted that the endpoints 201 to 210 are all located on the same side of the objects 21 to 26 (for example, the left side).

After finding the endpoints 201 to 210, the processor 11 may detect central points 211 to 251 between any two of the adjacent endpoints according to positions of the endpoints 201 to 210. For example, the central point 211 is located at a central position between the endpoints 201 and 202. The central point 221 is located at a central position between the endpoints 203 and 204. The central point 231 is located at a central position between the endpoints 205 and 206. The central point 241 is located at a central position between the endpoints 207 and 208. The central point 251 is located at a central position between the endpoints 209 and 210. After finding the central points 211 to 251, the processor 11 may detect a distance between any two of the adjacent central points among the central points 211 to 251.

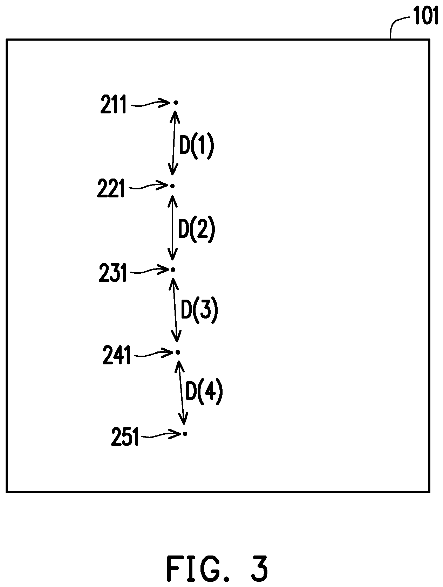

FIG. 3 is a schematic view of detecting distances between multiple adjacent central points according to an embodiment of the disclosure. Referring to FIG. 3, following the embodiment of FIG. 2, the processor 11 may obtain distances D(1) to D(4) between any two of the adjacent central points among the central points 211 to251. For example, the distance D(1) reflects a linear distance between the central points 211 and 221. The distance D(2) reflects a linear distance between the central points 221 and 231. The distance D(3) reflects a linear distance between the central points 231 and 241. The distance D(4) reflects a linear distance between the central points 241 and 251.

In an embodiment, the processor 11 may determine the target region in the image 101 based on one of the central points 211 to 251 as the center of the target region. In addition, the processor 11 may determine a coverage range of the target region according to at least one of the distances D(1) to D(4). For example, the at least one of the distances D(1) to D(4) may be positively correlated with an area of the coverage range of the target region. For example, if a value of the at least one of the distances D(1) to D(4) is larger, the area of the coverage range of the target region may also be larger.

In an embodiment, if the target region is a rectangle, the coverage range of the target region may be defined by a length and a width of the target region. Therefore, in an embodiment, the processor 11 may determine the length and/or the width of the target region according to the distance. In addition, if the target region is a circle, the coverage range of the target region may be defined by a radius of the target region. Therefore, in an embodiment, the processor 11 may determine the radius of the target region according to the distance.

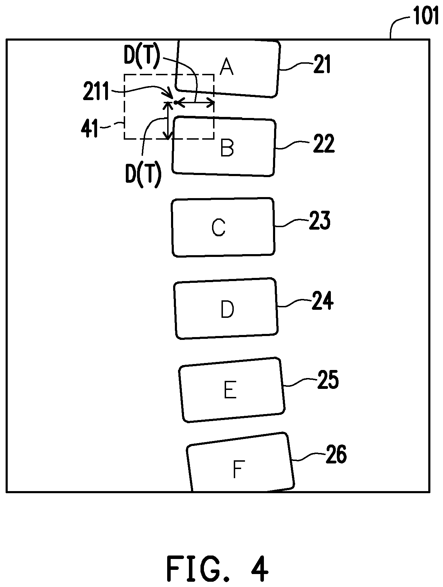

FIG. 4 is a schematic view of determining a target region in a first image according to an embodiment of the disclosure. Referring to FIG. 4, following the embodiment of FIG. 3 and taking the central point 211 as an example, the processor 11 may determine a target region 41 based on the central point 211 as the center of the target region. A center of the target region 41 may be located at a position where the central point 211 is located and/or overlap with the central point 211. In an embodiment, the processor 11 may also determine the target region 41 based on any one of the central points 221 to 251 as the center of the target region. In addition, the processor 11 may determine a coverage range of the target region 41 according to the at least one of the distances D(1) to D(4).

In an embodiment, the processor 11 may determine a distance D(T) according to an average value (also referred to as an average distance) of at least two of the distances D(1) to D(4). The distance D(T) may be a half of a length and/or a width of the target region 41. In addition, in an embodiment, if the target region 41 is a circle, the distance D(T) may also be a radius of the target region 41. In an embodiment, the average distance may also be replaced by any one of the distances D(1) to D(4).

In an embodiment, the distance D(T) may also be fine-tuned through a function to slightly enlarge or reduce the distance D(T). In this way, even if a shape of at least one of the objects 21 to 26 is relatively irregular, and/or a size is quite different from the other objects, the fine-tuned distance D(T) may also provide higher operating tolerance for the objects 21 to 26.

After the distance D(T) is determined, the target region 41 may be determined in the image 101 according to the distance D(T). In addition, after determining the target region 41, the processor 11 may capture an image located in the target region 41 from the image 101 as the image 102.

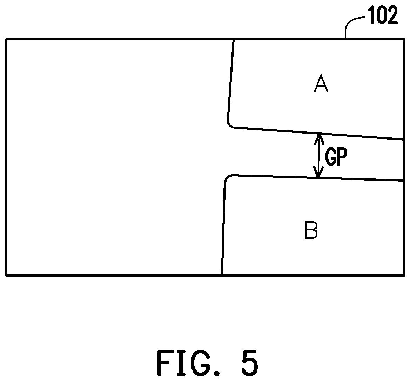

FIG. 5 is a schematic view of a second image according to an embodiment of the disclosure. Referring to FIG. 5, following the embodiment of FIG. 4, the image 102 captured from the target region 41 may present at least a portion of the object 21 (i.e., the osteomere A) and at least a portion of the object 22 (i.e., the osteomere B). In particular, the image 102 may present a gap GP between the objects 21 and 22. Afterwards, the processor 11 may analyze the image 102 to generate status information that may reflect a status of the gap GP. For example, the status information may include the scoring information related to mSASSS or other useful information.

In an embodiment, in an operation of capturing the image 102 from the target region 41, the processor 11 may filter out an image of at least a portion of endpoints or edges of the objects 21 (and/or 22) that is not located in the target region 41 in the image 101. After filtering out the image of at least the portion of the endpoints or the edges of the objects 21 (and/or 22) that is not located in the target region 41, the remaining image is the image 102, as shown in FIG. 5. In this way, when the image 102 is subsequently analyzed by the image analyzation module 121, the image analyzation module 121 may focus on analyzing an image content related to the gap GP in the image 102 (such as a width and/or a shape of the gap GP, etc.) and generate the corresponding status information.

Compared with the image 101 which is analyzed directly in a large scale, information, in the image 102, which is irrelevant to the gap (such as the gap GP) between the osteomeres to be analyzed and may cause a misjudge of the image analyzation module 121 is filtered out (for example, a main display content of the image 102 is located at the gap GP between the two objects 21 and 22 (for example, the osteomeres A and B)). Therefore, the image analyzation module 121 may more accurately generate the status information that may reflect the status of the gap. In this way, an accuracy of automated image analyzation for the X-ray image may be effectively improved.

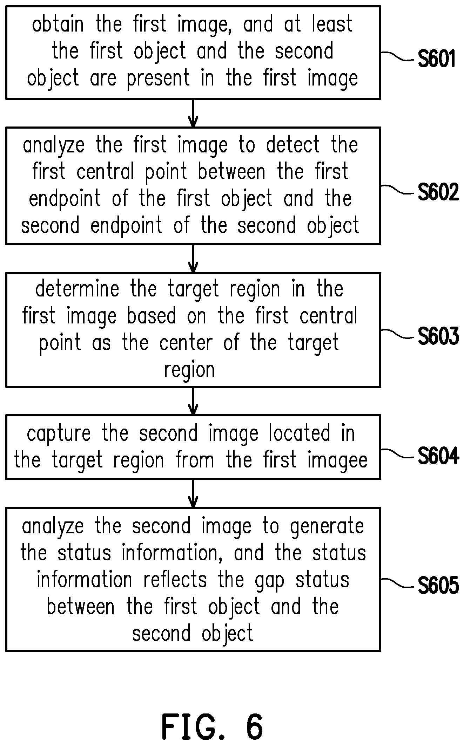

FIG. 6 is a flowchart of an image analyzation method according to an embodiment of the disclosure. Referring to FIG. 6, in step S601, the first image is obtained, and at least the first object and the second object are present in the first image. In step S602, the first image is analyzed to detect the first central point between the first endpoint of the first object and the second endpoint of the second object. In step S603, the target region is determined in the first image based on the first central point as the center of the target region. In step S604, the second image located in the target region is captured from the first image. In step S605, the second image is analyzed to generate the status information, and the status information reflects the gap status between the first object and the second object.

However, each of the steps in FIG. 6 has been described in detail as above. Thus, details in this regard will not be further reiterated in the following. It is worth noting that each of the steps in FIG. 6 may be implemented as multiple program codes or circuits, and the disclosure is not limited thereto. In addition, the method in FIG. 6 may be used in conjunction with the above exemplary embodiments, or may be used alone. The disclosure is not limited thereto.

Based on the above, in the embodiment of the disclosure, the information, in the original image (such as the X-ray image), which is irrelevant to the gap between the specific objects (such as the osteomeres) may be filtered out, and only the remaining image content is analyzed. In this way, the accuracy of the automated image analyzation for the image containing multiple objects may be effectively improved.

## Claims

1. An image analyzation method carried out by an image analyzation device (10), comprising:
obtaining a first image (101) which is an X-ray image, wherein at least a first object and a second object are presented in the first image (101);
**characterized by**
analyzing the first image (101) to detect a first central point between a first endpoint of the first object and a second endpoint of the second object;
determining a target region (41) in the first image (101) based on the first central point as a center of the target region (41);
capturing a second image (102) located in the target region (41) from the first image (101); and
analyzing the second image (102) to generate status information, wherein the status information reflects a gap (GP) status between the first object and the second object.

2. The image analyzation method according to claim 1, wherein there is a physical gap (GP) between the first object and the second object, and the first endpoint of the first object and the second endpoint of the second object are adjacent to each other through the physical gap (GP).

3. The image analyzation method according to claim 1, wherein a third object is further presented in the first image (101), and the image analyzation method further comprises:
analyzing the first image (101) to detect a second central point between the second endpoint of the second object and a third endpoint of the third object; and
determining a coverage range of the target region (41) according to a distance (D(1), D (2), D(3), D(4), D(T)) between the first central point and the second central point.

4. The image analyzation method according to claim 3, wherein the distance (D(1), D (2), D(3), D(4), D(T)) between the first central point and the second central point is positively correlated with an area of the coverage range of the target region (41).

5. The image analyzation method according to claim 1, wherein capturing the second image (102) located in the target region (41) from the first image (101) comprises:
filtering out an image of at least a portion of endpoints (201, 202, 203, 204, 205, 206, 207, 208, 209, 210) or edges of the first object that is not located in the target region (41) in the first image (101).

6. An image analyzation device (10), comprising:
a storage circuit (12); and
a processor (11) coupled to the storage circuit (12),
wherein the processor (11) is configured to:
obtain a first image (101) which is an X-ray image, wherein at least a first object and a second object are presented in the first image (101);
**characterized in that** the processor (11) is further configured to:
analyze the first image (101) to detect a first central point between a first endpoint of the first object and a second endpoint of the second object;
determine a target region (41) in the first image (101) based on the first central point as a center of the target region (41);
capture a second image (102) located in the target region (41) from the first image (101); and
analyze the second image (102) to generate status information, wherein the status information reflects a gap status between the first object and the second object.

7. The image analyzation device (10) according to claim 6, wherein there is a physical gap (GP) between the first object and the second object, and the first endpoint of the first object and the second endpoint of the second object are adjacent to each other through the physical gap (GP).

8. The image analyzation device (10) according to claim 6, wherein a third object is further presented in the first image (101), and the processor (11) is further configured to:
analyze the first image (101) to detect a second central point between the second endpoint of the second object and a third endpoint of the third object; and
determine a coverage range of the target region (41) according to a distance (D(1), D (2), D(3), D(4), D(T)) between the first central point and the second central point.

9. The image analyzation device (10) according to claim 8, wherein the distance (D(1), D (2), D(3), D(4), D(T)) between the first central point and the second central point is positively correlated with an area of the coverage range of the target region (41).

10. The image analyzation device (10) according to claim 6, wherein an operation of capturing the second image (102) located in the target region (41) from the first image (101) comprises:
filtering out an image of at least a portion of endpoints (201, 202, 203, 204, 205, 206, 207, 208, 209, 210) or edges of the first object that is not located in the target region (41) in the first image (101).

## Patentansprüche

1. Verfahren zur Bildanalyse, das von einer Vorrichtung zur Bildanalyse (10) durchgeführt wird, umfassend:
Erhalten eines ersten Bildes (101), das ein Röntgenbild ist, wobei mindestens ein erstes Objekt und ein zweites Objekt in dem ersten Bild (101) dargestellt sind;
**gekennzeichnet durch**
Analysieren des ersten Bildes (101), um einen ersten zentralen Punkt zwischen einem ersten Endpunkt des ersten Objekts und einem zweiten Endpunkt des zweiten Objekts zu erkennen;
Bestimmen eines Zielbereichs (41) in dem ersten Bild (101) auf der Grundlage des ersten zentralen Punkts als Zentrum des Zielbereichs (41);
Erfassen eines zweiten Bildes (102), das sich in der Zielregion (41) befindet, ausgehend von dem ersten Bild (101); und
Analysieren des zweiten Bildes (102), um Statusinformationen zu erzeugen, wobei die Statusinformationen einen Lückenstatus (GP) zwischen dem ersten Objekt und dem zweiten Objekt widerspiegeln.

2. Verfahren zur Bildanalyse nach Anspruch 1, wobei zwischen dem ersten Objekt und dem zweiten Objekt ein physikalischer Spalt (GP) vorhanden ist und der erste Endpunkt des ersten Objekts und der zweite Endpunkt des zweiten Objekts durch den physikalischen Spalt (GP) aneinander angrenzen.

3. Verfahren zur Bildanalyse nach Anspruch 1, wobei im ersten Bild (101) außerdem ein drittes Objekt dargestellt ist, und das Verfahren zur Bildanalyse außerdem umfasst:
Analysieren des ersten Bildes (101), um einen zweiten zentralen Punkt zwischen dem zweiten Endpunkt des zweiten Objekts und einem dritten Endpunkt des dritten Objekts zu erfassen; und
Bestimmen eines Erfassungsbereichs des Zielgebiets (41) in Abhängigkeit von einem Abstand (D(1), D(2), D(3), D(4), D(T)) zwischen dem ersten zentralen Punkt und dem zweiten zentralen Punkt.

4. Verfahren zur Bildanalyse nach Anspruch 3, wobei der Abstand (D(1), D(2), D(3), D(4), D(T)) zwischen dem ersten zentralen Punkt und dem zweiten zentralen Punkt positiv mit einer Fläche des Erfassungsbereichs der Zielregion (41) korreliert ist.

5. Verfahren zur Bildanalyse nach Anspruch 1, wobei das Erfassen des zweiten Bildes (102), das sich im Zielbereich (41) befindet, aus dem ersten Bild (101) umfasst:
Herausfiltern eines Bildes von mindestens einem Teil der Endpunkte (201, 202, 203, 204, 205, 206, 207, 208, 209, 210) oder Kanten des ersten Objekts, das sich nicht im Zielbereich (41) im ersten Bild (101) befindet.

6. Vorrichtung zur Bildanalyse (10), die Folgendes umfasst:
eine Speicherschaltung (12); und
einen Prozessor (11), der mit der Speicherschaltung (12) verbunden ist,
wobei der Prozessor (11) so konfiguriert ist, dass er:
Erhalten eines ersten Bildes (101), das ein Röntgenbild ist, wobei mindestens ein erstes Objekt und ein zweites Objekt in dem ersten Bild (101) dargestellt sind;
**dadurch gekennzeichnet, dass** der Prozessor (11) ferner so konfiguriert ist, dass er:
Analysieren des ersten Bildes (101), um einen ersten zentralen Punkt zwischen einem ersten Endpunkt des ersten Objekts und einem zweiten Endpunkt des zweiten Objekts zu erkennen;
Bestimmen eines Zielbereichs (41) in dem ersten Bild (101) auf der Grundlage des ersten zentralen Punkts als Zentrum des Zielbereichs (41);
Erfassen eines zweiten Bildes (102), das sich in der Zielregion (41) befindet, ausgehend von dem ersten Bild (101); und
Analysieren des zweiten Bildes (102), um Statusinformationen zu erzeugen, wobei die Statusinformationen einen Lückenstatus zwischen dem ersten Objekt und dem zweiten Objekt widerspiegeln.

7. Vorrichtung zur Bildanalyse (10) nach Anspruch 6, wobei zwischen dem ersten Objekt und dem zweiten Objekt ein physikalischer Spalt (GP) vorhanden ist und der erste Endpunkt des ersten Objekts und der zweite Endpunkt des zweiten Objekts durch den physikalischen Spalt (GP) aneinandergrenzen.

8. Vorrichtung zur Bildanalyse (10) nach Anspruch 6, wobei in dem ersten Bild (101) ferner ein drittes Objekt dargestellt wird, und der Prozessor (11) ferner so konfiguriert ist, dass er:
Analysieren des ersten Bildes (101), um einen zweiten zentralen Punkt zwischen dem zweiten Endpunkt des zweiten Objekts und einem dritten Endpunkt des dritten Objekts zu erfassen; und
Bestimmen eines Erfassungsbereichs des Zielgebiets (41) entsprechend einem Abstand (D(1), D(2), D(3), D(4), D(T)) zwischen dem ersten zentralen Punkt und dem zweiten zentralen Punkt.

9. Vorrichtung zur Bildanalyse (10) nach Anspruch 8, wobei der Abstand (D(1), D(2), D(3), D(4), D(T)) zwischen dem ersten zentralen Punkt und dem zweiten zentralen Punkt positiv mit einer Fläche des Erfassungsbereichs des Zielbereichs (41) korreliert ist.

10. Vorrichtung zur Bildanalyse (10) nach Anspruch 6, wobei ein Vorgang des Erfassens des zweiten Bildes (102), das sich in der Zielregion (41) befindet, von dem ersten Bild (101) umfasst:
Herausfiltern eines Bildes von mindestens einem Teil der Endpunkte (201, 202, 203, 204, 205, 206, 207, 208, 209, 210) oder Kanten des ersten Objekts, das sich nicht im Zielbereich (41) im ersten Bild (101) befindet.

## Revendications

1. Un procédé d'analyse d'image effectuée par un dispositif d'analyse d'image (10) comprenant
l'obtention d'une première image (101) qui est une image radiographique, dans laquelle au moins un premier objet et un deuxième objet sont représentés dans la première image (101) ;
**caractérisé par**
analyser la première image (101) pour détecter un premier point central entre un premier point d'extrémité du premier objet et un second point d'extrémité du second objet ;
déterminer une zone cible (41) dans la première image (101) sur la base du premier point central en tant que centre de la zone cible (41) ;
l'acquisition d'une deuxième image (102) située dans la région cible (41), à partir de la première image (101) ; et
analyser la deuxième image (102) pour produire des informations d'état, les informations d'état reflétant un état d'écart (GP) entre le premier objet et le deuxième objet.

2. Le procédé d'analyse d'image selon la revendication 1, dans lequel un espace physique (GP) est présent entre le premier objet et le deuxième objet, et le premier point d'extrémité du premier objet et le deuxième point d'extrémité du deuxième objet sont contigus l'un à l'autre par l'espace physique (GP).

3. Le procédé d'analyse d'image selon la revendication 1, dans lequel un troisième objet est en outre représenté dans la première image (101), et le procédé d'analyse d'image comprend en outre :
analyser la première image (101) pour détecter un deuxième point central entre le deuxième point d'extrémité du deuxième objet et un troisième point d'extrémité du troisième objet ; et
déterminer une zone de détection de la zone cible (41) en fonction d'une distance (D(1), D(2), D(3), D(4), D(T)) entre le premier point central et le second point central.

4. Le procédé d'analyse d'image selon la revendication 3, dans lequel la distance (D(1), D(2), D(3), D(4), D(T)) entre le premier point central et le deuxième point central est corrélée positivement avec une surface de la zone de détection de la région cible (41).

5. Le procédé d'analyse d'image selon la revendication 1, dans lequel l'acquisition de la deuxième image (102) située dans la zone cible (41) comprend l'extraction de la première image (101) :
le filtrage d'une image d'au moins une partie des points d'extrémité (201, 202, 203, 204, 205, 206, 207, 208, 209, 210) ou des bords du premier objet qui n'est pas dans la zone cible (41) dans la première image (101).

6. Un dispositif d'analyse d'image (10) comprenant
un circuit de mémoire (12) ; et
un processeur (11) connecté au circuit de mémoire (12),
dans lequel le processeur (11) est configuré pour :
l'obtention d'une première image (101) qui est une image radiographique, dans laquelle au moins un premier objet et un deuxième objet sont représentés dans la première image (101) ;
**caractérisé en ce que** le processeur (11) est en outre configuré pour :
analyser la première image (101) pour détecter un premier point central entre un premier point d'extrémité du premier objet et un second point d'extrémité du second objet ;
déterminer une zone cible (41) dans la première image (101) sur la base du premier point central en tant que centre de la zone cible (41) ;
l'acquisition d'une deuxième image (102) située dans la région cible (41), à partir de la première image (101) ; et
analyser la seconde image (102) pour produire des informations d'état, les informations d'état reflétant un état d'écart entre le premier objet et le second objet.

7. Le dispositif d'analyse d'image (10) selon la revendication 6, dans lequel un espace physique (GP) est présent entre le premier objet et le deuxième objet, et le premier point d'extrémité du premier objet et le deuxième point d'extrémité du deuxième objet sont adjacents l'un à l'autre par l'espace physique (GP).

8. Le dispositif d'analyse d'image (10) selon la revendication 6, dans lequel un troisième objet est en outre représenté dans la première image (101), et le processeur (11) est en outre configuré pour :
analyser la première image (101) pour détecter un deuxième point central entre le deuxième point d'extrémité du deuxième objet et un troisième point d'extrémité du troisième objet ; et
déterminer une zone de détection de la zone cible (41) correspondant à une distance (D(1), D(2), D(3), D(4), D(T)) entre le premier point central et le second point central.

9. Le dispositif d'analyse d'image (10) selon la revendication 8, dans lequel la distance (D(1), D(2), D(3), D(4), D(T)) entre le premier point central et le deuxième point central est corrélée positivement avec une surface de la zone de détection de la zone cible (41).

10. Le dispositif d'analyse d'image (10) selon la revendication 6, dans lequel une opération comprend l'acquisition de la deuxième image (102) située dans la région cible (41) à partir de la première image (101) :
le filtrage d'une image d'au moins une partie des points d'extrémité (201, 202, 203, 204, 205, 206, 207, 208, 209, 210) ou des bords du premier objet qui n'est pas dans la zone cible (41) dans la première image (101).
